# EUROPÄISCHE PATENTSCHRIFT

(11) **EP 1 347 264 B1**
(45) Veröffentlichungstag und Bekanntmachung des Hinweises auf die Patenterteilung: **15.12.2004**
(21) Anmeldenummer: 02006268.3
(22) Anmeldetag: 20.03.2002
(51) Int. Cl.: G01B 7/34, G12B 21/02

(54) **Verfahren zur Herstellung eines SPM-Sensors**
Method of fabricating a probe for SPM
Procédé de fabrication d'une sonde pour SPM

(43) Veröffentlichungstag der Anmeldung: 24.09.2003
(73) Patentinhaber: Nanoworld AG, 2007 Neuchâtel (CH)
(72) Erfinder: Lutter, Stefan, 2000 Neuchâtel (CH)
(74) Vertreter: Klocke, Peter, Dipl.-Ing.

(56) Entgegenhaltungen:
- US-A- 5 021 364
- US-A- 5 386 720
- US-A- 5 811 017
- US-A- 6 148 662

## Beschreibung

Die vorliegende Erfindung betrifft ein Verfahren zur Herstellung eines SPM-Sensors mit einem Halteelement, einem Cantilever und einer aus der Oberfläche des Cantilevers herausragenden, durch drei Flächen begrenzten Sensorspitze am freien Ende des Cantilevers.

Raster-Kraft-Mikroskope (Scanning Probe Microscopes (SPMs)) sind allgemein bekannt und werden in der Praxis benutzt, um mit feinen Sensoren in atomarer Auflösung die Oberfläche von Proben abzutasten. SPMs umfassen sogenannte STM (Scanning Tunneling Microcope) und AFM (Atomic Force Microscope), die ebenfalls allgemein bekannt sind.

Bei allen diesen Mikroskopen werden Sensoren eingesetzt, in die aus einem Mikrobiegebalken, im nachfolgenden Cantilever genannt, bestehen, der an seinem einem Ende ein Halteelement und am anderen Ende eine Sensorspitze aufweist, mit der die Probe abgetastet wird. Diese an dem freien Ende des Cantilever angeordnete Sensorspritze kann dabei so ausgeformt sein, dass sie das freie Ende überragt oder nicht. Der Einsatz der jeweiligen Sensoren hängt von dem Einbau in dem jeweiligen Mikroskop ab, wobei es Situationen gibt, bei denen die Spitze in dem Mikroskop verdeckt ist, so dass ein Justieren schlecht durchgeführt werden kann.

Derartige vorstehend beschriebene SPM-Sensoren sind beispielsweise aus der US 5811 017 bekannt. Dort ist das Ausgangsmaterial ein zusammengesetztes Material mit Silizium auf einem Isolator (Silicon on Insulator (SOI)), bei dem mindestens drei Lithographieschritte zur Erzeugung eines SPM-Sensors mit Halteelement, rechteckigem Cantilever und Sensorspitze aus Silizium erforderlich sind. Die Verwendung von SOI-Materialien als Ausgangsmaterial ist wesentlich teurer als monokristallines Silizium. Zur Erzeugung von zwei der drei Begrenzungsflächen der Sensorspitze ist bei diesem Verfahren ein teurer Einzelwafer-Trockenätzprozess erforderlich.

Aus der US 5021 364 ist ebenfalls ein SPM-Sensor bekannt, bei dem eine Siliziumsensorspritze beispielsweise auf einem Nitrid-Cantilever angeordnet ist. Das Cantilevermaterial wird abgeschieden und ist somit kein Bulkmaterial. Auch hier werden teure Einzelwafer-Trockenätzprozesse eingesetzt, um die Siliziummembran durchzuätzen und einen Cantilever bzw. zwei der drei Begrenzungsflächen der Sensorspitze zu erzeugen.

US 6 148 662 und US 5 386 720 beschreiben SPM-Sensoren die mehrschichtig aufgebaut sind.

Ausgehend von diesem Stand der Technik liegt der vorliegenden Erfindung die Aufgabe zugrunde, eine weitere Möglichkeit zur Herstellung eines SPM-Sensors vorzuschlagen, wobei dieser vorteilhafterweise in einem Batchlauf hergestellt werden kann.

Diese Aufgabe wird erfindungsgemäß durch ein Verfahren mit den Merkmalen des Anspruchs 1 gelöst. Weitere vorteilhafte Ausgestaltungen sind den Unteransprüchen zu entnehmen.

Die Besonderheit des Verfahrens besteht darin, dass ausgehend von einem monokristallinen (100)-Siliziumwafer der Herstellungsprozess durchgeführt wird und damit der gesamte Herstellungsprozess in einem Batchlauf erfolgen kann. Des weiteren werden gegenüber dem Stand der Technik nur wenige Trockenätzprozesse und dafür mehr kostengünstige nasschemische Ätzprozesse durchgeführt. Speziell gegenüber dem Stand der Technik wird ein rechteckiger Cantilever durch ein nasschemisches Ätzverfahren hergestellt und muss nicht trocken strukturiert werden. Das Strukturieren, das heißt das Aufbringen der Maske und die Formgebung (Lithographieschritte), erfolgt ausschließlich von der gleichen, der Sensorspitze gegenüberliegenden Seite des Wafers, der Waferunterseite. Als Waferoberseite wird die Seite verstanden, auf der sich die Sensorspitze ausbildet. Entsprechend ist die gegenüberliegende Seite die Waferunterseite. Abdünnungsschritte werden in diesem Zusammenhang nicht als Formgebungsschritte verstanden. Die Formung der Waferoberseite beschränkt sich auf einen ganzflächigen Abdünnschritt mit dem die Cantileverdicke eingestellt wird und bei dem sich die Sensorspitze ausbildet.

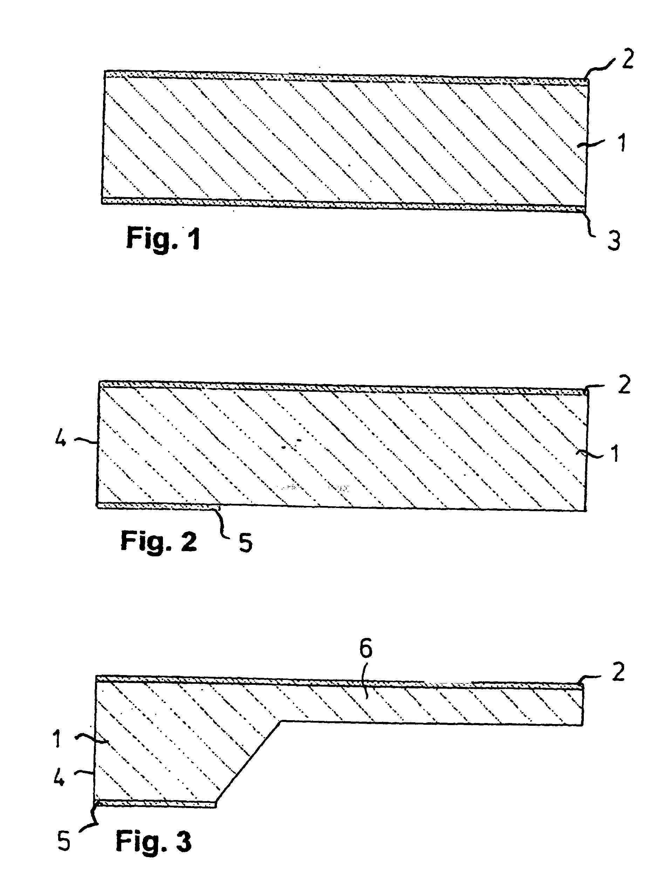

Nachfolgend wird die Erfindung in Verbindung mit den begleitenden Zeichnungen näher erläutert. Die Figuren 1 bis 10 zeigen die einzelnen Schritte des Verfahrens.

Figur 1 zeigt einen (100)-Siliziumwafer 1 mit einer Dicke von ca. 300 bis 500 µm, dessen Oberseite mit einer Siliziumoxidschicht 2 und dessen Unterseite mit einer Siliziumoxidschicht 3, beispielsweise durch thermische Oxidation, in einer Stärke von wenigen 100 nm aufgebracht ist.

Als nächstes wird photolithographisch eine Maske zur Herstellung des Halteelements 4 erzeugt. Hierzu wird ein Photolack auf der Waferunterseite aufgebracht und strukturiert. Anschließend wird die Siliziumoxidschicht 3 auf der Waferunterseite an den freiliegenden Stellen entfernt, so dass nur der Bereich 5 auf der Waferunterseite bestehen bleibt. Zuvor wurde die Waferoberseite von einem Schutzlack abgedeckt. Alle Photolacke werden nach der Übertragung der Photomaske in das Siliziumoxid wieder entfernt. Dies sind allgemein übliche gängige Verfahren. Die Aufbringung des Photolacks erfolgt hier beispielsweise durch das sogenannte Spinverfahren und die Entfernung mittels üblicher Lösungsmittel. Die Entfernung der Siliziumoxidschicht geschieht mittels gepufferter Flusssäure (HF). Das Ergebnis ist in Figur 2 dargestellt.

In dem nächsten, in Figur 3 gezeigten Schritt wird nun mittels eines nasschemischen Ätzprozesses, beispielsweise mittels Kalilauge (KOH), von der Waferunterseite her das Substratmaterial abgedünnt und damit das Halteelement 4 erzeugt. Die Dicke der dabei entstehenden Siliziummembran 6 wird so gewählt, dass sie mindestens der Summe aus der gewünschten Höhe der zu erstellenden Sensorspitze und der gewünschten endgültigen Dicke des zu erstellenden Cantilevers des SPM-Sensors entspricht.

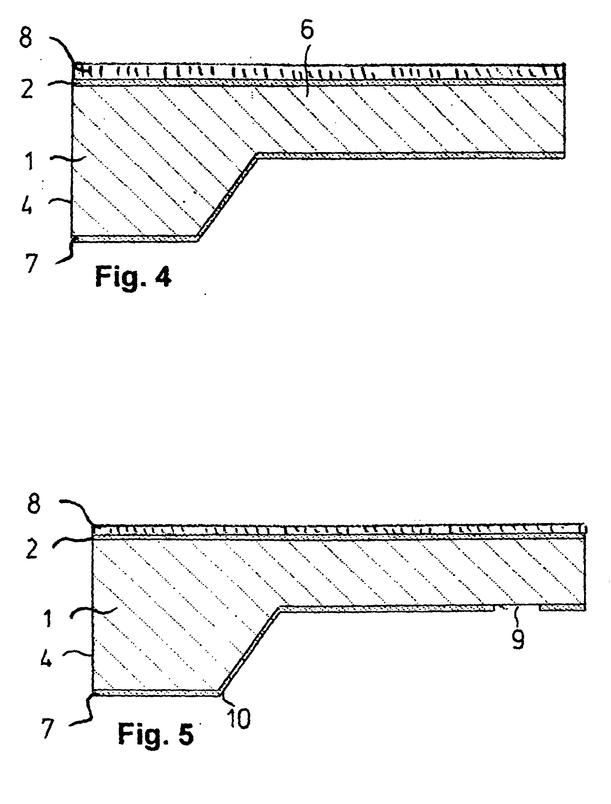

Anschließend werden beide Seiten des Wafers oxidiert und auf der Waferoberseite eine Siliziumnitridschicht in einem PECVD-Verfahren (Plasma Enhanced Chemical Vapour Deposition) aufgebracht. In der Figur 4 sind die Siliziumoxidschicht auf der Unterseite mit der Bezugsziffer 7 und die Siliziumnitridschicht auf der Oberseite mit der Bezugsziffer 8 bezeichnet.

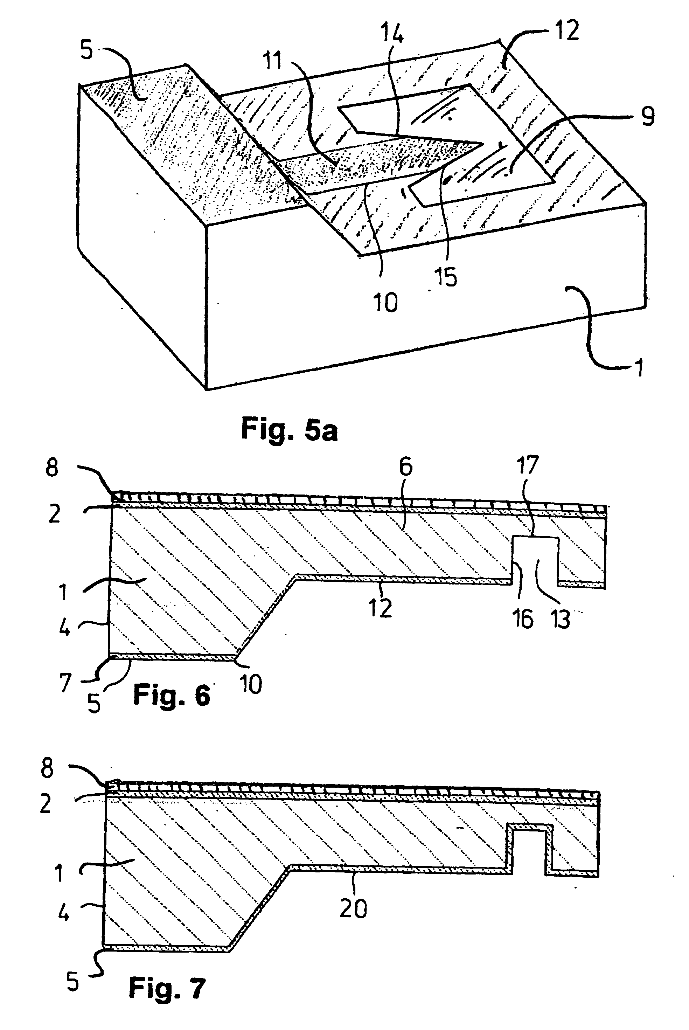

Als nächstes wird eine Maske zur Herstellung von Begrenzungsflächen des freien Endes des zu erstellenden Cantilevers, die gleichzeitig zwei Flächen der herzustellenden Sensorspitze definieren, erzeugt. Hierzu wird ein Photolack auf die vorstrukturierte Waferunterseite aufgebracht und strukturiert. Das Aufbringen des Photolacks erfolgt in dem Ausführungsbeispiel in einem Sprühbelackungsverfahren und das Strukturieren mittels Projektionslithographie. Grundsätzlich sind jedoch auch andere bekannte Maßnahmen möglich. Die Photomaske wird in die Siliziumoxidschicht 7 übertragen, so dass eine teilweise Entfernung im Bereich 9 erfolgt. Die Siliziumnitridschicht 8 auf der Waferoberseite wird dabei etwas abgedünnt. Anschließend wird der Photolack entfernt. Als nächstes wird die Maske zur Herstellung des Cantilevers erzeugt, in dem erneut ein Photolack auf die vorstrukturierte Waferunterseite aufgebracht und entsprechend der gewünschten Form strukturiert wird. Auch hier erfolgt das Aufbringen vorzugsweise im Sprühbelackungsverfahren und das Strukturieren mittels Projektionslithographie. Anschließend wird diese Photomaske ebenfalls in die Siliziumoxidschicht 7 übertragen, so dass das Siliziumoxid partiell abgedünnt wird. Anschließend wird der Photolack entfernt. Infolgedessen entsteht eine Stufe in der Siliziumoxidschicht auf der Unterseite. Figur 5a zeigt hierzu eine perspektivische Ansicht der Waferunterseite mit der Siliziumoxidschicht 7, die verschiedene Dickenbereiche aufweist, wodurch sich die Stufe 10 in Figur 5 ausbildet. Die Bereiche 5 und 11 sind dicker als der übrige Bereich 12. Der Bereich 9 ist freigelegtes Silizium.

Als nächster Verfahrensschritt erfolgt ein Siliziumtiefenätzen, vorzugsweise mit dem bekannten ASE-Verfahren (Advanced Silicon Etching), mit Herstellung senkrechter Seitenwände auf der Rückseite des Siliziumwafers 1, so dass in dem Bereich 9 der Figur 5 eine Vertiefung 13 in der Siliziummembran 6 entsteht. Als Ätzmaske dient die vorstehend beschriebene Siliziumoxidmaske zur Herstellung der Begrenzungsflächen 14 und 15 (Figur 5a) des freien Endes des zu erstellenden Cantilevers. Die Tiefe der Vertiefung 13 entspricht mindestens der Summe der gewünschten Höhe der zu erstellenden Sensorspitze und der Dicke des zu erstellenden Cantilevers des SPM-Sensors. Die Dicke der Siliziummembran 6 ist dabei so gewählt, dass die Siliziummembran bei diesem Schritt, wie in Figur 6 gezeigt, nicht vollständig durchgeätzt wird.

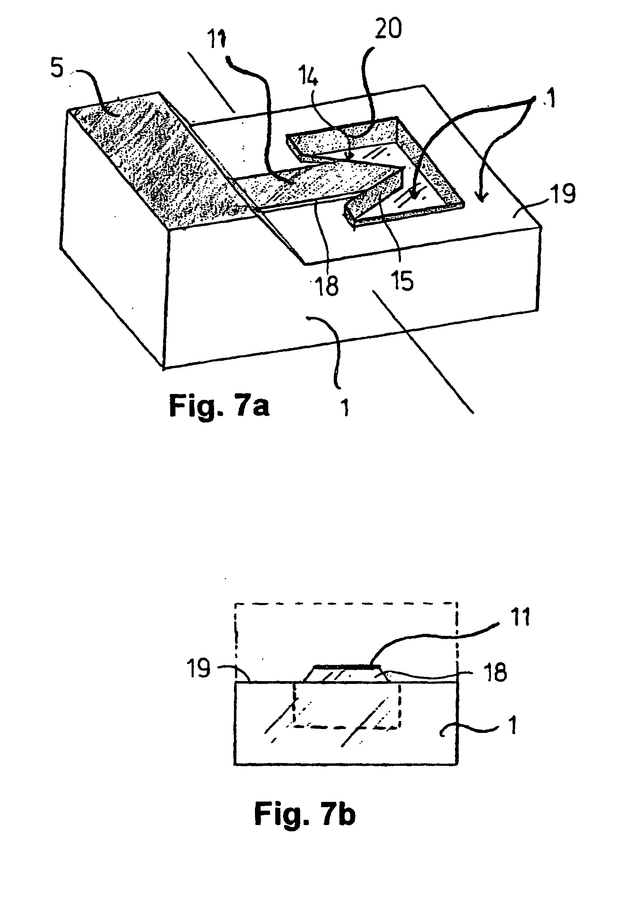

Anschließend erfolgt eine Oxidation des Siliziumwafers auf der Waferunterseite, wobei die Seitenwände 16 und die Bodenfläche 17 der Vertiefung 13 von Siliziumoxid 20 bedeckt werden (Figur 7).

Danach wird die Waferunterseite in einem gerichteten, selektiv zu Silizium arbeitenden Trockenätzprozess unterzogen, und die Siliziumoxidschicht auf der Bodenfläche 17 der Vertiefung 13 sowie in dem Bereich 12 (siehe Figur 5a) entfernt. Dabei wird die Cantilevermaske auf die Unterseite des Wafers übertragen. Nachfolgend wird ein nasschemischer Ätzschritt, beispielsweise mittels KOH ausgeführt in dem ausgehend von der soeben übertragenen Maske ein Cantilever 18 vorstrukturiert wird. Die Ätztiefe und damit die Dicke des vorstrukturierten Cantilevers 18 wird dabei größer gewählt (beispielsweise 20 %) als die entgültige Cantileverdicke des herzustellenden SPM-Sensors. Das Ergebnis dieses Vorgangs ist in den Figuren 7a und 7b dargestellt und zeigt in Figur 7a die Unterseite des Siliziumsubstrats mit einem sich aus der Oberfläche 19 des Substratmaterials heraushebenden Cantilevers 18 mit den senkrechten Flächen 14 und 15. Figur 7b zeigt eine Schnittdarstellung. Die Flächen 14 und 15 sind mit einer Siliziumoxidschicht bedeckt. Ebenso befindet sich auf dem Cantilever 18 die Siliziumoxidschicht 11.

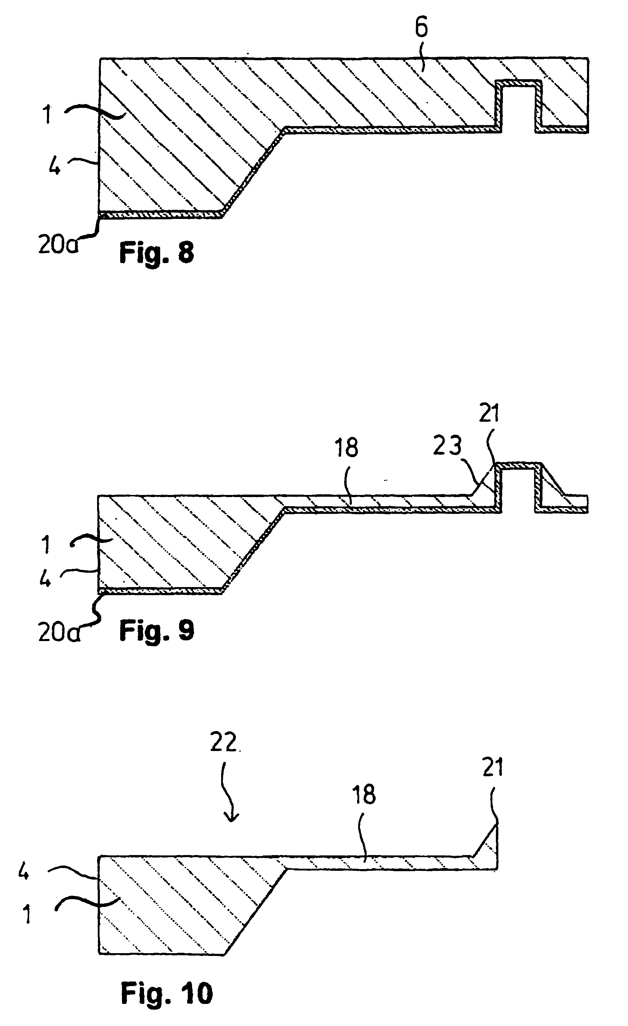

Anschließend werden alle Oxid- und Nitridschichten 2, 20 bzw. 8 in Flusssäure entfernt. Danach wird erneut eine Oxidation ausgeführt, um die Waferunterseite vollständig mit einer Siliziumoxidschicht 20a zu bedecken. Dann wird die Siliziumoxidschicht 2 auf der Waferoberseite durch einen selektiv zu Silizium gewählten Trockenätzschritt entfernt. Das Ergebnis dieses Vorgangs ist aus der Figur 8 ersichtlich.

Schließlich wird der Wafer 1 einem nasschemischen Ätzschritt unterzogen. Dabei wird die Siliziummembran 6 von der Waferoberseite her abgedünnt. Dieser Prozess wird gestoppt, wenn der vorstrukturierte Cantilever 18 auf die gewünschte Dicke abgedünnt wurde. An der nicht von Siliziumoxid bedeckten offenen Seite des Cantilevers 18 hat sich eine Spitze 21 ausgebildet, die durch die Flächen 14 und 15 und eine (111)-Kristallebene 23 definiert ist. Die Höhe der Spitze 21 entspricht der Vertiefung 13 (Figur 9) und beträgt typischerweise 5 - 25 µm. Die Dicke des Cantilevers 18 beträgt typischerweise 0,5 - 10 µm.

Abschießend werden die noch verbleibenden Siliziumoxidschichten nasschemisch entfernt, so dass ein SPM-Sensor 22, wie in Figur 10 dargestellt, mit einem Halteelement 4, einem Cantilever 18 und einer Sensorspitze 21 entsteht. Die entstandene Spitze kann durch eine weitere Niedertemperaturoxidation, beispielsweise bei unter 1000° C, und abschließendem Entfernen der aufgewachsenen Oxidschicht angeschärft werden.

Die im Zusammenhang mit dem vorstehend beschriebenen Verfahren bevorzugten Materialien können auch durch entsprechend wirkende, dem Fachmann geläufige Materialien ersetzt werden.

## Patentansprüche

1. Verfahren zur Herstellung eines monolithischen, monokristallinen Silizium-SPM-Sensors bestehend aus einem Halteelement, einem Cantilever und einer aus der Oberfläche des Cantilevers herausragenden, durch drei Flächen begrenzten Sensorspitze, die alle aus einem Substrat aus monokristallinen Silizium hergestellt sind, mit den folgenden Schritten:
A Oxidation eines monokristallinen (100)-Siliziumwafers (1);
B Vorstrukturieren des Halteelements (4) und des Cantilevers (18), beide aus rnonokristatlinem Silizium, durch Abdünnen des Siliziums von der Unterseite des Wafers (1);
C Strukturieren sowohl des freien Endes des Cantilevers (18) und zwei Seiten (14, 15) der Sensorspitze (21) aus monokristallinem Silizium als auch des Cantilevers (18) von der Unterseite des Wafers;
D Herstellen des Cantilevers (18) und der Sensorspitze (21) durch Abdünnen des Siliziums von der Oberseite des Wafers.

2. Verfahren nach Anspruch 1, wobei Schritt B umfasst:
Photolithographisches Erzeugen des Halteelements (4) in der Oxidschicht (3) auf der Unterseite;
nasschemisches Ätzen der Waferunterseite zur Herstellung des Halteelements (4) und einer Siliziummembran (6) für den späteren Cantilever (18).

3. Verfahren nach Anspruch 2, wobei Schritt C umfasst:
Oxidieren des vorstrukturierten Siliziumwafers und Aufbringen einer Siliziumnitridschicht (8) auf der Waferoberseite;
Erzeugen einer Maske zur Strukturierung von Begrenzungsflächen (14, 15) des freien Endes des Cantilevers;
Erzeugen einer Maske zum Strukturieren des Cantilevers (18);
Herstellen der Spitze des Cantilevers (18) durch Siliziumtiefenätzen und
Erzeugen einer Vertiefung (13) deren Tiefe mindestens der gewünschten Höhe der Sensorspitze (21) zuzüglich der Dicke des zu erstellenden Cantilevers (18) entspricht;
Herstellen des Cantilevers (18) durch Verdünnen des Substratmaterials in der Vertiefung (13) und seitlich der Begrenzungsflächen (14, 15) des Cantilevers (18);
Entfernen der Siliziumnitridschichten (8) und der Oxidschichten.

4. Verfahren nach Anspruch 3, wobei das Erzeugen der Maske zur Strukturierung der Begrenzungsflächen des freien Endes des Cantilevers umfasst:
Aufbringen und Strukturieren eines Photolacks auf der Waferunterseite, Übertragen der Photomaske und Entfernen der freiliegenden Siliziumoxidschicht sowie anschließendes Entfernen des Photolacks.

5. Verfahren nach Anspruch 4, wobei das Erzeugen einer Maske durch Strukturierung des Cantilevers umfasst:
Aufbringen und Strukturieren eines Photolacks auf die vorstrukturierte Waferunterseite, Übertragen der Photomaske in die Siliziumoxidschicht sowie anschließendes Entfernen des Photolacks, wobei die Siliziumoxidschicht teilweise abgedünnt wird und eine Stufe (10) in der Siliziumoxidschicht entsteht.

6. Verfahren nach Anspruch 3, wobei die Herstellung des Cantilevers umfasst:
Oxidieren des Siliziumwafers;
Entfernen der entstandenen Siliziumoxidschicht auf der Bodenfläche (17) der Vertiefung (13) und Übertragen der Cantilevermaske auf die Waferunterseite mittels eines gerichteten selektiv zu Silizium arbeitenden Oxidtrockenätzprozess;
nasschemisches Ätzen der Waferunterseite mit einer Ätztiefe, die die Dicke des zu erzeugenden Cantilevers übersteigt.

7. Verfahren nach einem der vorangegangenen Ansprüche, wobei Schritt D umfasst:
Selektives Trockenätzen der Waferoberseite und Entfernen der Siliziumoxidschicht (2);
nasschemisches Ätzen des Siliziumwafers auf der Waferoberseite und Anhalten des Vorgangs bei erreichen der gewünschten Dicke des Cantilevers (18);
nasschemisches Entfernen der verbleibenden Siliziumoxidschichten.

## Claims

1. A process for producing a monolithic, monocrystalline silicon SPM sensor consisting of a holding element, a cantilever and a sensor tip which are all made from a substrate of monocrystalline silicon, the tip projects out of the surface of the cantilever and is delimited by three surfaces, comprising the following steps:
A oxidation of a monocrystalline (100)-silicon wafer (1);
B pre-patterning of the holding element (4) and of the cantilever (18), both of monocrystalline silicon, by thinning of the silicon from the underside of the wafer (1);
C patterning of the free end of the cantilever (18) and two sides (14, 15) of the sensor tip (21) of monocrystalline silicon as well as of the cantilever (18) from the underside of the wafer;
D production of the cantilever (18) and of the sensor tip (21) by thinning of silicon from the top side of the wafer.

2. The process as claimed in claim 1, in which step B comprises:
photolithographic fabrication of the holding element (4) in the oxide layer (3) on the underside;
wet-chemical etching of the wafer underside in order to produce the holding element (4) and a silicon membrane (6) for what will subsequently be the cantilever (18).

3. The process as claimed in claim 2, in which step C comprises:
oxidation of the pre-patterned silicon wafer and application of a silicon nitride layer (8) to the wafer top side;
fabrication of a mask for patterning boundary surfaces (14, 15) of the free end of the cantilever;
fabrication of a mask for patterning of the cantilever (18);
production of the tip of the cantilever (18) by deep silicon etching and
fabrication of a recess (13), the depth of which at least corresponds to the desired height of the sensor tip (21) plus the thickness of the cantilever (18) which is to be formed;
production of the cantilever (18) by thinning of the substrate material in the recess (13) and laterally with respect to the boundary surfaces (14, 15) of the cantilever (18);
removal of the silicon nitride layers (8) and of the oxide layers.

4. The process as claimed in claim 3, in which the production of the mask for the patterning of the boundary surfaces of the free end of the cantilever comprises:
application and patterning of a photoresist on the wafer underside, transfer of the photomask and removal of the uncovered silicon oxide layer and
subsequent removal of the photoresist.

5. The process as claimed in claim 4, in which the production of a mask by patterning of the cantilever comprises:
application and patterning of a photoresist on the pre-patterned wafer underside, transfer of the photomask into the silicon oxide layer and
subsequent removal of the photoresist, the silicon oxide layer being partially thinned and a step (10) being formed in the silicon oxide layer.

6. The process as claimed in claim 3. in which the production of the cantilever comprises:
oxidation of the silicon wafer;
removal of the silicon oxide layer formed on the base surface (17) of the recess (13) and transfer of the cantilever mask to the wafer underside by means of a targeted oxide dry-etching process which operates selectively with respect to silicon;
wet-chemical etching of the wafer underside with an etching depth which exceeds the thickness of the cantilever to be fabricated.

7. The process as claimed in one of the preceding claims, in which step D comprises:
selective dry etching of the wafer top side and removal of the silicon oxide layer (2);
wet-chemical etching of the silicon wafer on the wafer top side and stopping the operation when the desired thickness of the cantilever (18) is reached;
wet-chemical removal of the remaining silicon oxide layers.

## Revendications

1. Procédé de fabrication d'un capteur SPM monolithique, monocristallin au silicium composé d'un élément de maintien, d'un bras monté en porte-à-faux et d'une pointe de capteur faisant saillie de la surface du bras monté en porte-à-faux et étant délimitée par trois surfaces, tous étant fabriqués en substrat de silicium monocristallin, comportant les étapes suivantes :
A oxydation d'une pastille ou plaquette (1) de Silicium (100) monocristallin ;
B pré-structuration de l'élément de maintien (4) et du bras monté en porte-à-faux (18), tous deux en silicium monocristallin, par amincissement du silicium depuis la face inférieure de la pastille ou plaquette (1) ;
C structuration tant de l'extrémité libre du bras monté en porte-à-faux (18) et des deux côtés (14,15) de la pointe de capteur(21) en silicium monocristallin que du bras (18) depuis la face inférieure de la pastille ou plaquette ;
D fabrication du bras monté en porte-à-faux (18) et de la pointe de capteur (21) par amincissement du silicium depuis la face supérieure de la pastille ou plaquette.

2. Procédé selon la revendication 1, dans lequel l'étape B comprend :
la génération par photolithographie de l'élément de maintien (4) dans la couche d'oxyde (3) sur la face inférieure ;
la gravure chimique à l'état humide de la face inférieure de la pastille ou plaquette pour fabriquer l'élément de maintien (4) et une membrane de silicium (6) pour le futur bras (18).

3. Procédé selon la revendication 2, dans lequel l'étape C comprend :
l'oxydation de la pastille de silicium pré-structurée et l'application d'une couche de nitrure de silicium (8) sur la face supérieure de la pastille ;
la génération d'un masque de structuration des surfaces de délimitation (14, 15) de l'extrémité libre du bras ;
la génération d'un masque de structuration du bras (18) ;
la fabrication de la pointe du bras (18) par gravure en creux du silicium et
génération d'un creux (13) dont la profondeur correspond au moins à la hauteur de la pointe de capteur (21) souhaitée en plus de l'épaisseur du bras (18) à élaborer ;
la fabrication du bras (18) par amincissement du matériau de substrat dans le creux (13) et latéralement des surfaces de délimitation (14, 15) du bras (18) ;
l'élimination de la couche de nitrure de silicium (8) et des couches d'oxyde.

4. Procédé selon la revendication 3, dans lequel la génération du masque de structuration des surfaces de délimitation de l'extrémité libre du bras comprend :
l'application et la structuration d'une laque photosensible sur la partie inférieure de la pastille ;
le transfert du masque photo et l'élimination de la couche d'oxyde de silicium mis à nu, puis l'élimination de la laque photosensible.

5. Procédé selon la revendication 4, dans lequel la génération d'un masque par structuration du bras comprend :
l'application et la structuration d'une laque photosensible sur la face inférieure de la pastille pré-structurée, le transfert du masque photo dans la couche d'oxyde de silicium, puis l'élimination de la laque photosensible, la couche d'oxyde de silicium étant partiellement amincie et un palier ou une marche (10) se formant dans la couche d'oxyde de silicium.

6. Procédé selon la revendication 3, dans lequel la fabrication du bras comprend :
l'oxydation de la pastille de silicium ;
l'élimination de la couche d'oxyde de silicium formée sur la surface de fond (17) du creux (13) et le transfert du masque de bras sur la face inférieure de la pastille au moyen d'un processus de gravure à sec d'oxyde travaillant sélectivement de façon orientée vers le silicium ;
la gravure chimique à l'état humide de la face inférieure de la pastille selon une profondeur de gravure qui dépasse l'épaisseur du bras à générer.

7. Procédé selon l'une des revendications précédentes, dans lequel l'étape D comprend :
la gravure à sec sélective de la face supérieure de la pastille et l'élimination de la couche d'oxyde de silicium (2) ;
la gravure à l'état humide de la pastille de silicium sur la face supérieure de la pastille et l'arrêt du procédé une fois atteinte l'épaisseur souhaitée du bras (18) ;
l'élimination chimique à l'état humide des couches d'oxyde de silicium restantes.
